# EUROPEAN PATENT SPECIFICATION

(11) **EP 1 772 460 B1**
(45) Date of publication and mention of the grant of the patent: **25.03.2009**
(21) Application number: 06255104.9
(22) Date of filing: 03.10.2006
(51) Int. Cl.: C07F 7/00, C07F 9/00, C07F 11/00, C23C 16/34

(54) **Ti, Ta, Hf, Zr and related metal silicon amides for ALD/CVD of metal-silicon nitrides, oxides, oxides or oxynitrides**
Ti, Ta, Hf, Zr und zugehörige Metallsiliziumamiden zur ALD/CVD von Metall-Silizium-Nitriden, Oxiden oder Oxynitriden
Ti, Ta, Hf, Zr et amides métalliques de silicium associés pour ALD/CVD de nitrides, oxides ou oxynitrures de métal-silicium

(30) Priority: 07.10.2005 US 724757 P; 18.09.2006 US 522768
(43) Date of publication of application: 11.04.2007
(73) Proprietor: AIR PRODUCTS AND CHEMICALS, INC., Allentown, PA 18195-1501 (US)
(72) Inventor: Norman, John Antony Thomas, Encinitas CA 92024 (US); Lei, Xinjian, Vista CA 92081 (US)
(74) Representative: Hatt, Anna Louise

(56) References cited:
- US-A- 5 603 988
- PASSARELLI, VINCENZO ET AL: "Unsymmetrically substituted dimethyldiaminosilanes as ligands towards zirconium(IV)" EUROPEAN JOURNAL OF INORGANIC CHEMISTRY , (22), 4439-4446 CODEN: EJICFO; ISSN: 1434-1948, 2004, XP002414874
- KIM, SUNG-JOON ET AL: "Titanium Complexes Incorporating 1,1-Bis(tert-butylamido)-1- silacycloalkane Ligands: Generation of Alkyl Derivatives and Reactivity toward Molecular Oxygen" ORGANOMETALLICS , 23(3), 559-567 CODEN: ORGND7; ISSN: 0276-7333, 2004, XP002414875
- KIM, SUNG-JOON ET AL: "Sterically Controlled Silacycloalkyl Diamide Complexes of Titanium(IV): Synthesis, Structure, and Catalytic Behavior of (cycl)Si(NBut)2TiCl2 [(cycl)Si = Silacyclobutane, Silacyclopentane, Silacyclopentene, and Silacyclohexane]" ORGANOMETALLICS , 20(11), 2136-2144 CODEN: ORGND7; ISSN: 0276-7333, 2001, XP002414876
- BRAUER, D. J. ET AL: "Cyclic silylamides of vanadium, niobium, tantalum and hafnium. Crystal and molecular structures of spirocyclic tetraamides of vanadium(IV), methylniobium(V), and hafnium(IV)" JOURNAL OF ORGANOMETALLIC CHEMISTRY , 310(3), 317-32 CODEN: JORCAI; ISSN: 0022-328X, 1986, XP002414877
- BRAUER, D. J. ET AL: "Titan-Stickstoff-Verbindungen XXIX. Kristall- und Molekülstruktur Spirocyclischer Amide von Titan und Zirconium mit dem Liganden Me2Si(N-tert-Bu)2" JOURNAL OF ORGANOMETALLIC CHEMISTRY , 190(4), 343-51 CODEN: JORCAI; ISSN: 0022-328X, 1980, XP002414878

## Description

The field of the present invention is copper diffusion barrier layers in the fabrication of integrated circuits to avoid the migration of copper or other metals deposited as metal lines into insulating layers and other layers, features and semiconductor materials during the deposition and subsequent treatment of the metal line fabrication. The invention is also related to thin films as electrodes or dielectric layers in the semi-conductor industry.

Brauer, D. J., H. Buerger, E. Essig and W. Geschwandtner (Journal of Organometallic Chemistry 1980, 190: 343-51) disclosed titanium-nitrogen compounds, crystal and molecular structure of spirocyclic amides of titanium and zirconium with the ligand Me₂Si(N-tert-Bu)₂ and treatment of dilithiated Me₂Si(NHBu^{t})₂ with MCl₄ to provide M[(^{t}BuN)₂SiMe₂]₂.

In a first aspect, the present invention relates to a deposition process wherein an organometallic complex represented by the structure: 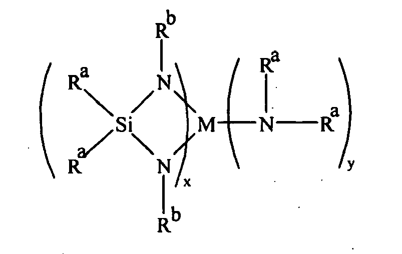 wherein:
each R^{a} is independently selected from dialkylamide, difluoralkylamide, hydrogen, alkyl, alkoxy, fluoroalkoxy, fluoroalkyl, cycloaliphatic, and aryl or two adjacent R^{a} can together form a ring optionally containing nitrogen or oxygen;
each R^{b} is independently selected from dialkylamide, difluoralkylamide, hydrogen, alkyl, alkoxy, fluoroalkoxy, fluoroalkyl, cycloaliphatic, and aryl;
M is a metal of Group 4, 5 or 6 of the Periodic Table of the Elements;
x is at least 1 and
when M is a Group 4 metal, 2x + y = 4,
when M is a Group 5 metal, 2x + y =5, and
when M is a Group 6 metal, 2x + y = 6.
is
(a) introduced to a deposition chamber, vaporized and deposited on a substrate to form a conformal metal silicon nitride thin film; and/or
(b) reacted as precursor in an ALD or CVD process with a nitrogen containing reagent selected from ammonia, hydrazine, dimethylhydrazine and nitrogen to form a metal silicon nitride-based film; and/or
(c) reacted as precursor in an ALD or CVD process with a reagent selected from an oxidizing reagent and mixture of oxidizing and nitrogen containing reagents to form a metal silicon oxide or oxynitride-based film; and/or
(d) introduced as precursor to a deposition chamber, followed by the steps of:
   purging the deposition chamber to remove unreacted organometallic precursor and any byproduct;
   introducing a metal amide to deposit a metal silicon nitride film on a heated substrate;
   purging the deposition chamber to remove any unreacted metal amide and byproduct; and
   repeating the cyclic deposition process until a desired thickness of film is established; and/or
(e) employed as precursor in a CVD process optionally with ammonia in a mixture further comprising a metal amide selected from tetrakis(dimethylamino)titanium, tetrakis(diethylamino)titanium, tetrakis(ethylmethylamino)titanium, tetrakis(dimethylamino)zirconium, tetrakis(diethylamino)zirconium, tetrakis(ethylmethylamino)zirconium, tetrakis(dimethylamino)hafnium, tetrakis(diethylamino)hafnium, tetrakis(ethylmethylamino)hafnium, *tert*-butylimino tris(diethylamino)tantalum, *tert*-butylimino tris(dimethylamino)tantalum, *tert*-butylimino tris(ethylmethylamino)tantalum, ethyllimino tris(diethylamino)tantalum, ethyllimino tris(dimethylamino)tantalum, ethyllimino tris(ethylmethylamino)tantalum, *tert*-amylimino tris(dimethylamino)tantalum, *tert*-amylimino tris(diethylamino)tantalum, pentakis(dimethylamino)tantalum, *tert*-amylimino tri(ethylmethylamino)tantalum, bis(*tert-*butylimino)bis(dimethylamino)tungsten, bis(*tert-*butylimino)bis(diethylamino)tungsten, bis(*tert-*butylimino)bis(ethylmethylamino)tungsten, and a mixture thereof.

The reference to selection of moieties throughout this specification includes independent selection where the same moiety occurs more than once in a complex. For example, two different R¹ moieties may be present in the complex shown above.

In one preferred embodiment, the organometallic complex is represented by the structure: 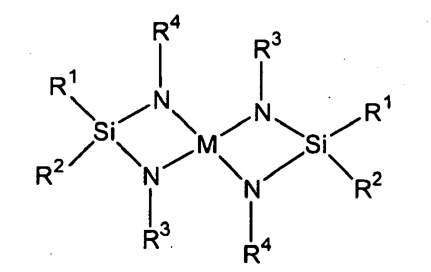 wherein M is a metal selected from Group 4 of the Periodic Table of the Elements and R¹⁻⁴ are independently selected from dialkylamide, difluoralkylamide, hydrogen, alkyl, alkoxy, fluoroalkoxy, fluoroalkyl, cycloaliphatic, and aryl with the additional provision that when R¹ and R² are dialkylamide, difluoralkylamide, alkoxy, fluoroalkoxy, or fluoroalkyl, they can be connected to form a ring.

Preferably in this embodiment, one or both R¹ and/or one or both R² are hydrogen.

Preferably, one or both R³ and/or one or both R⁴ are t-butyl.

Suitably, the organometallic complex comprises bis(N,N'-di(*tert*-butyl)-diaminosilyl)titanium. Bis(N,N'-di(*tert*-butyl)- diaminosilyl)titanium is represented below.

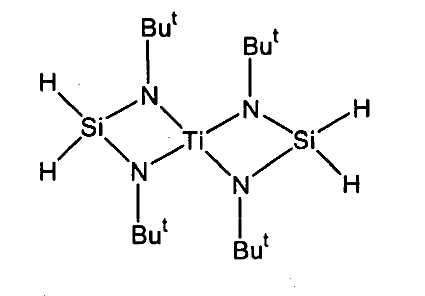

In another preferred embodiment, the organometallic complex as is represented by the structure: 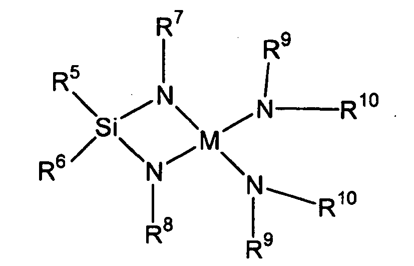 wherein M is a metal selected from Group 4 of the Periodic Table of the Elements and R⁵⁻¹⁰ are independently selected from hydrogen, alkyl, alkoxy, fluoroalkyl, fluoroalkoxy, cycloaliphatic, and aryl with the additional provisions that when R⁵ and R⁶ are alkoxy, fluoroalkoxy or fluoroalkyl they can be connected to form a ring and when R⁹ and R¹⁰ are alkoxy, fluoroalkoxy or fluoroalkyl they can be connected to form a ring.

Preferably in this embodiment, one or both R⁵ and/or one or both R⁶ are selected from hydrogen and dimethylamino.

Preferably, one or both R⁷ and/or one or both R⁸ are t-butyl.

Preferably, one or both R⁹ and/or one or both R¹⁰ are methyl.

Suitably, the organometallic complex comprises HSi(NMe₂)(Bu^{t}N)₂Ti(NMe₂)₂.

Preferably, M is selected from titanium, zirconium and hafnium.

In a third preferred embodiment, the organometallic complex is represented by the structure: 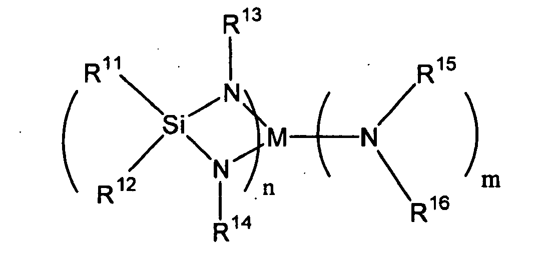 wherein M is a metal selected from Group 5 of the Periodic Table of the Elements and R¹¹⁻¹⁶ are independently selected from hydrogen, alkyl, alkoxy, fluoroalkoxy, fluoroalkyl and cycloaliphatic, and aryl; n=1,2, m=5-2n, wherein when R¹¹ and R¹² are alkoxy, fluoroalkoxy or fluoroalkyl they can be connected to form a ring and when R¹⁵ and R¹⁸ are alkoxy, fluoroalkoxy or fluoroalkyl they can be connected to form a ring.

Preferably, M is selected from vanadium, niobium, and tantalum.

In a fourth preferred embodiment, the organometallic complex is represented by the structure: 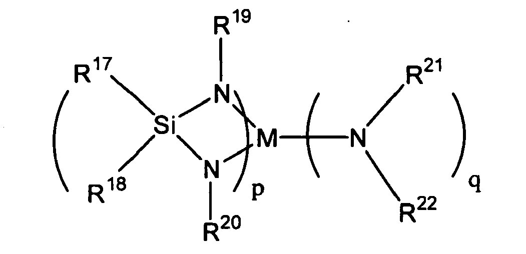 wherein M is a metal selected from Group 6 of the Periodic Table of the Elements and R¹⁷⁻²² are independently selected from hydrogen, alkyl, alkoxy, fluoroalkyl , fluoroalkoxy, cycloaliphatic, and aryl; p=1,2,3, q=6-2p, wherein when R¹⁷ and R¹⁸ are alkoxy, fluoroalkoxy, or fluoroalkyl they can be connected to form a ring and when R²¹ and R²² are alkoxy, fluoroalkoxy, or fluoroalkyl they can be connected to form a ring.

Preferably in this embodiment, M is selected from chromium, molybdenum and tungsten.

In a second aspect, the present invention relates to an ALD or CVD process as described above, wherein the reaction condition is selected from thermal, plasma, remote plasma and other energizing environment.

Preferably, the metal amide is an amide of a metal selected from titanium, zirconium, hafnium, tantalum and tungsten.

Preferably, the metal amide comprises one or more groups selected from dimethylamino, diethylamino, ethylmethylamino, *tert*-butylimino, ethylimino and *tert-*amylimino.

Preferably, the metal amide is selected from tetrakis(dimethylamino)titanium, tetrakis(diethylamino)titanium, tetrakis(ethylmethylamino)titanium, tetrakis(dimethylamino)zirconium, tetrakis(diethylamino)zirconium, tetrakis(ethylmethylamino)zirconium, tetrakis(dimethylamino)hafnium, tetrakis(diethylamino)hafnium, tetrakis(ethylmethylamino)hafnium, *tert*-butylimino tris(diethylamino)tantalum, *tert*-butylimino tris(dimethylamino)tantalum, *tert*-butylimino tris(ethylmethylamino)tantalum, ethyllimino tris(diethylamino)tantalum, ethyllimino tris(dimethylamino)tantalum, ethyllimino tris(ethylmethylamino)tantalum, *tert*-amylimino tris(dimethylamino)tantalum, *tert*-amylimino tris(diethylamino)tantalum, pentakis(dimethylamino)tantalum, *tert*-amylimino tri(ethylmethylamino)tantalum, bis(*tert-*butylimino)bis(dimethylamino)tungsten, bis(tert-butylimino)bis(diethylamino)tungsten, bis(*tert-*butylimino)bis(ethylmethylamino)tungsten, and a mixture thereof.

Preferably, the process is selected from an atomic layer deposition (ALD) process and a chemical vapor deposition (CVD) process, optionally with ammonia.

Preferably, the process uses an additional treatment step selected for final film densification or film annealing, selected from thermal, ozone, plasma, UV and microwave.

In a third aspect, the invention relates to an organometallic complex represented by the structure:
(a) 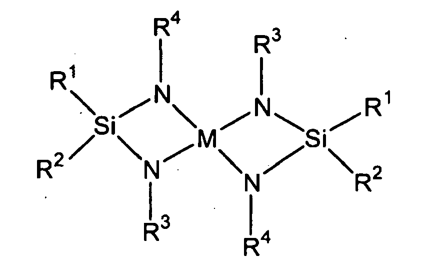 wherein M is a metal selected from Group 4 of the Periodic Table of the Elements and R¹⁻⁴ are independently selected from dialkylamide, difluoralkylamide, hydrogen, alkyl, alkoxy, fluoroalkoxy, fluoroalkyl, cycloaliphatic, and aryl with the additional provision that one or both R¹ and/or one or both R² are hydrogen and that when R¹ and R² are dialkylamide, difluoralkylamide, alkoxy, fluoroalkoxy, or fluoroalkyl, they can be connected to form a ring; or
(b) 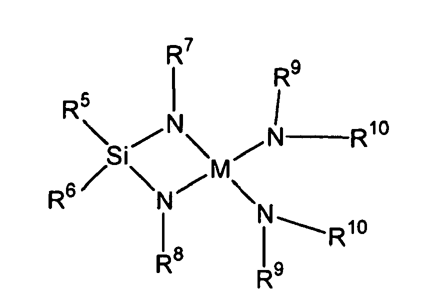 wherein M is a metal selected from Group 4 of the Periodic Table of the Elements and R⁵⁻¹⁰ are independently selected from hydrogen, alkyl, alkoxy, fluoroalkyl, fluoroalkoxy, cycloaliphatic, and aryl with the additional provisions that when R⁵ and R⁶ are alkoxy, fluoroalkoxy or fluoroalkyl they can be connected to form a ring and when R⁹ and R¹⁰ are alkoxy, fluoroalkoxy or fluoroalkyl they can be connected to form a ring; or
(c) 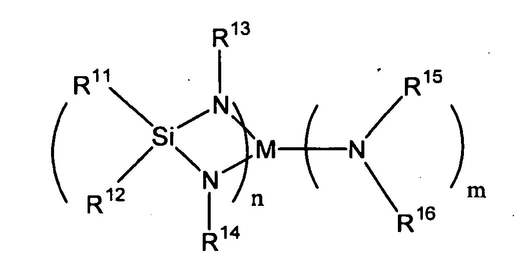 wherein M is a metal selected from Group 5 of the Periodic Table of the Elements and R¹¹⁻¹⁶ are independently selected from hydrogen, alkyl, alkoxy, fluoroalkoxy, fluoroalkyl and cycloaliphatic, and aryl; n=1,2, m=5-2n, wherein when R¹¹ and R¹² are alkoxy, fluoroalkoxy or fluoroalkyl they can be connected to form a ring and when R¹⁵ and R¹⁶ are alkoxy, fluoroalkoxy or fluoroalkyl they can be connected to form a ring; or
(d) 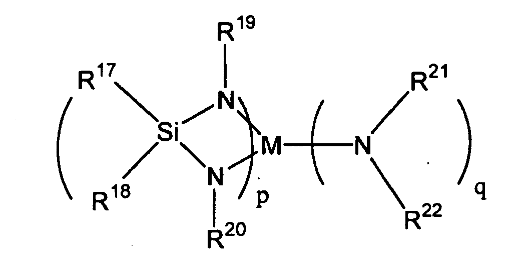 wherein M is a metal selected from Group 6 of the Periodic Table of the Elements and R¹⁷⁻²² are independently selected from hydrogen, alkyl, alkoxy, fluoroalkyl , fluoroalkoxy, cycloaliphatic, and aryl; p=1,2,3, q=6-2p, wherein when R¹⁷ and R¹⁸ are alkoxy, fluoroalkoxy, or fluoroalkyl they can be connected to form a ring and when R²¹ and R²² are alkoxy, fluoroalkoxy, or fluoroalkyl they can be connected to form a ring.

Preferably in complex (a), the complex comprises bis(N,N'-di(*tert*-butyl)-diaminosilyl)titanium.

Preferably in complex (b), one or both R⁵ and/or one or both R⁸ are selected from hydrogen and dimethylamino.

Preferably in complex (b), one or both R⁷ and/or one or both R⁸ are t-butyl.

Preferably in complex (b), one or both R⁹ and/or one or both R¹⁰ are methyl.

Preferably in complex (b), the complex comprises HSi(NMe₂)(Bu^{t}N)₂Ti(NMe₂)₂.

Preferably in complex (a)/(b), M is selected from titanium, zirconium and hafnium.

Preferably in complex (c), one or both R³ and/or one or both R⁴ are t-butyl.

Preferably in complex (c), M is selected from vanadium, niobium, and tantalum.

Preferably in complex (d), M is selected from chromium, molybdenum and tungsten.

Features described in connection with one aspect of the invention can be used in connection with other aspects of the invention.

The invention will be further described with reference to the Examples and to the Figures, in which:
Figure 1 is a single crystal structure of bis(N,N'-di(*tert*-butyl)diaminosilyl)titanium for use in the CVD or ALD of titanium silicon nitride containing films.
Figure 2 is a graph of thermal gravimetric analysis (TGA) of bis(N,N'-di(*tert-*butyl)diaminosilyl)titanium. The almost complete weight loss indicates it is volatile and can be readily delivered into a reaction chamber in a typical CVD or ALD process. Thus, it is a suitable precursor to prepare titanium silicon nitride containing films with or without ammonia or other suitable nitrogen containing reagent.
Figure 3 shows the deposition rate (Å/min (0.1 nm/min)) of Ti-Si-N films as a function of substrate temperature at a deposition pressure of 1.5 Torr (200 Pa) with a He carrier gas flow rate of 46 sccm (standard cubic centimetres per minute) with and without ammonia.
Figure 4 shows the composition of titanium silicon nitride films at various temperatures. The titanium silicon nitride films are formed from chemical vapor deposition using Ti(H₂Si(NBu^{t})₂)₂ as organometallic precursor.

Copper has now effectively replaced aluminum as the interconnect metal for semiconductor logic devices due to its superior electrical conductivity and high electromigration resistance. However, copper can quickly and destructively diffuse through other materials in the device such as silicon or inter-level dielectrics leading to electrical malfunctioning in the finished product. For these reasons it is necessary to encapsulate the copper with diffusion barriers. Metal nitride and metal silicon nitride thin films are candidate materials for these diffusion barriers. They can also be used close to the silicon surface of a transistor as gate electrode materials, where they pose no contamination threat to the silicon and can be processed at relatively high temperatures. Metal nitride layers, e.g., titanium nitride (TiN) layers have been employed as barrier layers against diffusion, including copper diffusion, in semiconductor device structures, e.g., contacts, vias and trenches. However, these barrier layers must be extremely thin to accommodate the higher aspect ratios of today's devices, since it is desirable for the barrier to contribute the least additional resistance to a copper interconnect as possible. These barriers must be chemically inert and must resist inter-diffusion of adjacent materials through them, have low electrical resistivity (exhibit high conductivity), low contact or via resistance and low junction leakage.

Metal nitrides tend to be metallic compounds than can possess a crystalline structure, whereas the metal nitride/silicon nitride films tend to be amorphous. In the former case, the crystallinity of the film can provide for a breakdown of its barrier properties, since copper diffusion can occur along its crystal grain boundaries. In the latter case, since the materials are amorphous, there are no grain boundaries so barrier properties are improved. From an alternative perspective, the silicon nitride component acts to block the grain boundaries in the metal nitride.

However, as more silicon nitride is added into the metal nitride to achieve this amorphous nature, the electrical resistivity of the material increases so the level of silicon nitride needs to be carefully controlled. Typically these barrier films need to be grown as highly conformal thin films capable of evenly coating deeply etched features on a silicon wafer with a precisely controlled film thickness. These features are ultimately filled with copper to provide the interconnecting electrical pathways between transistor devices at the silicon wafer surface. Chemical vapor deposition ("CVD") is often used to grow these conformal thin films, but as device dimensions continue to shrink barrier film thicknesses on the order of 10 Angstroms (1 nm) are needed. At this point CVD becomes challenged and atomic layer deposition ("ALD") becomes more attractive. In either case, volatile metal compounds are required as precursors. For metal nitride films, such as titanium nitride, tantalum nitride or tungsten nitride, metal amide or amide/imide compounds are used. These compounds are reacted in an ALD or CVD process with a suitable reagent, such as ammonia, to deposit a metal nitride. An example would be the CVD process, which uses the precursor tetrakis(diethylamido)titanium reacting with ammonia to give TiN. Alternatively, a precursor can be thermolysed on the wafer surface in a CVD process to give a continuous thin film of a titanium carbonitride material, which is subsequently annealed using a hydrogen/nitrogen plasma to densify the film and reduce the level of carbon to give a mostly titanium nitride film.

An example of a suitable precursor for the latter process is tetrakis(dimethylamido)titanium. Alternatively, a tantalum nitride film can be grown in an ALD process using the precursor pentakis(dimethylamido)tantalum reacting with ammonia. Alternatively, a tungsten nitride film can be grown by ALD using the precursor (Bu^{t}N=)₂W(NMe₂)₂ reacting in alternating cycles with ammonia. If silicon nitride is to be introduced into these films, it is usually done by co-reacting the metal nitride precursor with a silicon nitride precursor, such as silane or a silicon amide compound, such as tetrakis(dimethylamido)silicon. Thus, a metal (M) containing precursor, a silicon containing precursor and a nitrogen source, such as ammonia, are co-reacted together to give the MSiN film. Thus, the degree of silicon incorporation will depend to some degree upon the ability to precisely control the metering of the silicon precursor during the process.

Currently in the formation of ternary films, a metal amide, silane, and ammonia are sequentially deposited on the substrate via cyclic deposition, but the process poses processing issues. Silane is a pyrophoric gas and creates a potential safety hazard. In addition, three precursors are employed in the cyclic process, requiring three deposition steps along with respective purge steps. On the other hand, aminosilane or hydrazinosilane and ammonia have been reported to form silicon nitride. Importantly, though, it has been found that in these films, there is no direct metal-silicon bond in the metal silicon nitride formed by either chemical vapor deposition or atomic layer deposition, implying metal nitride and silicon nitride are in separate phases in the resulting film, i.e., metal nitride is stuffed with silicon nitride. The present invention is a potentially more elegant approach to growing MSiN films which uses a precursor that already has both the metal and silicon in its structure so both elements are delivered in the same molecule at a precisely fixed ratio, although the exact ratio of metal to silicon in a film resulting from the processing of such a precursor can still be controlled as a function of the exact process conditions of pressure, temperature, energy input and flows. The present invention will be illustrated in several non-limiting examples, set forth below.

### Ex. 1: Synthesis of bis(N,N'-di(tert-butyl)diaminosilyl)titanium, Ti(H₂Si(NBu^{t})₂)₂

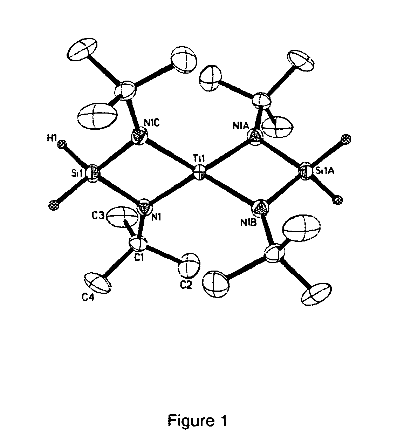

Under an atmosphere of dry nitrogen, 7.0g (40 mmoles) of bis(tert-butylamino)silane were dissolved in 100 ml of dry tetrahydrofuran solvent and cooled to -78°C. To this solution 32.0 ml (840 mmoles) of 2.5 M n-butyl lithium in hexanes were added dropwise over a 10 minute period and the resulting mixture stirred for an additional 30 minutes at -78°C resulting in the formation of a white precipitate. This mixture was then allowed to warm to room temperature for an additional 20 minutes after which it was re-cooled to -78°C. To a separate vessel containing 10 ml of dry tetrahydrofuran under a nitrogen atmosphere was slowly added 2.14 ml (10mmoles) of titanium tetrachloride resulting in the formation of a yellow precipitate. This latter precipitate was then added to the first precipitate at -78°C and then allowed to warm to room temperature and stir overnight. The tetrahydrofuran and hexane solvents were then stripped off under vacuum and the resulting yellow-green solid was mixed with 100 ml of fresh dry hexane under nitrogen, the resulting mixture filtered and the resulting green oil was heated to 110°C under dynamic vacuum and distilled over as an orange colored solid into a collection vessel cooled with liquid nitrogen. Yield = 3.6.g (45%). This crude product was then further purified by sublimation at 65-70°C. The structure was confirmed by single crystal X-ray analysis (see the drawing in Figure 1).
¹H NMR : (500 MHz, C₆D₆): δ= 1.35 (s, 36H), δ= 5.41 (s, 4H).
¹³C NMR: (500 MHz, C₆D₆): δ= 35.25 (s, 12C), δ= 58.97 (s, 4C).

Mass spectrum shows a strong peak at 387m/z (ie parent of 393 m/z minus CH₃ of 15 m/z).

An alternative synthesis may also be used where two equivalents of the dianion of bis(tert-butylamino)silane are added to titanium tetrachloride in hexanes or dry tetrahydrofuran at -78°C and the resulting mixture processed as above.

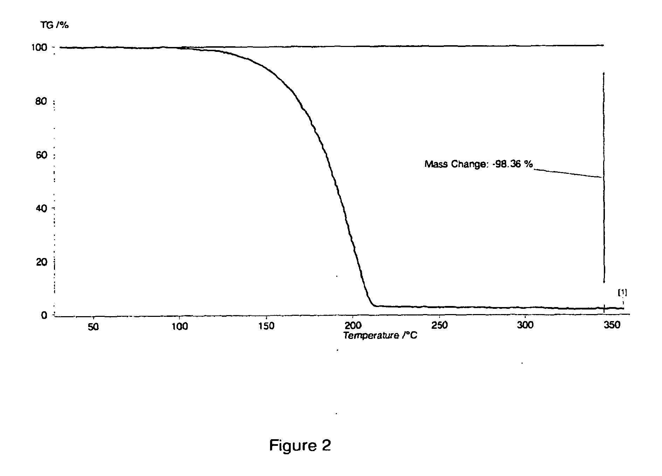

A graph of thermal gravimetric analysis (TGA) of bis(N,N'-di(*tert-*butyl)diaminosilyl)titanium was shown in Fig. 2. The almost complete weight loss indicated it was volatile and could be readily delivered into a reaction chamber in a typical CVD or ALD process. Thus, it is a suitable precursor to prepare titanium silicon nitride containing films with or without ammonia or other suitable nitrogen containing reagent.

### Ex. 2: Synthesis of HSi(NMe₂)(Bu^{t}N)₂Ti(NMe₂)₂

Under an atmosphere of dry nitrogen, 3.48g (20 mmoles) of bis(tert-butylamino)silane were dissolved in 100 ml of dry tetrahydrofuran solvent and cooled to -78°C. To this solution 24.4 ml (40 mmoles) of 1.6 M n-butyl lithium in hexanes were added dropwise over a 10 minute period and the resulting mixture stirred for an additional 30 minutes at -78°C resulting in the formation of a white precipitate. This mixture was then allowed to warm to room temperature for an additional 20 minutes after which it was re-cooled to -78°C. To a separate vessel containing 10 ml of dry tetrahydrofuran under a nitrogen atmosphere was slowly added 0.55 ml (5 mmoles) of titanium tetrachloride resulting in the formation of a yellow precipitate. This titanium precipitate was then added to the lithiated mixture at -78°C. To this mixture, 20g (20 mmoles) of 5 wt% lithium dimethylamide was added maintaining -78°C. The resulting mixture was then allowed to warm to room temperature and stirred overnight. The solvents were then stripped and the resulting crude product was mixed with 100 ml of dry hexane under nitrogen, filtered and the hexane then removed under vacuum. The resulting oil was then heated to 110°C under dynamic vacuum and distilled over as an orange colored solid into a collection vessel cooled with liquid nitrogen. This orange colored product was then purified by vacuum sublimation at 60°C.

### Ex. 3: Formation of Ti-Si-N films by CVD using Ti(H₂Si(NBu^{t})₂)₂ as an organometallic precursor

Ti(H₂Si(NBu^{t})₂)₂ was used as the organometallic precursor for the formation of metal silicon nitride films in a conventional CVD apparatus using known CVD techniques.

Ti(H₂Si(NBu^{t})₂)₂ was vaporized in a bubbler at 90 °C and transported into a CVD chamber in combination with and without NH₃ as a nitrogen-containing source. The CVD chamber was a cold-wall system having a heated substrate holder. The substrate was maintained at the temperature range from 400 to 500 °C. The chamber pressure was maintained at 1 to 2 Torr (130 to 270 Pa).

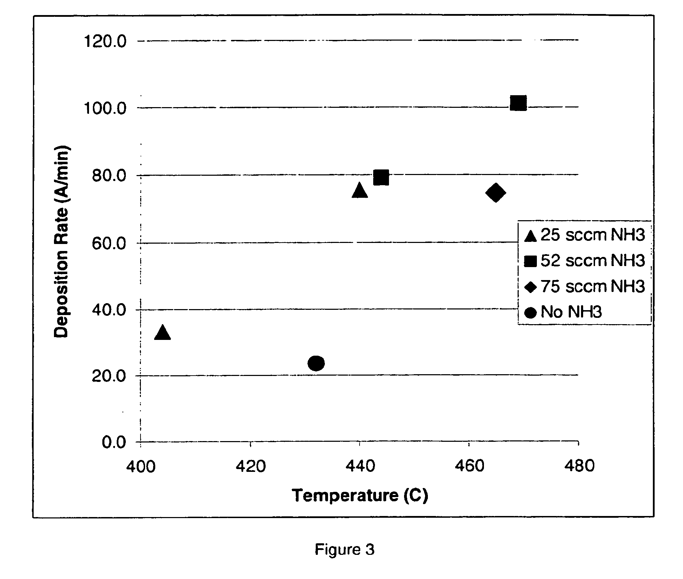

The deposition rate of Ti-Si-N films as a function of substrate temperature at a deposition pressure of 1.5 Torr (200 Pa) with a He carrier gas flow rate of 46 sccm was shown in Figure 3. The flow rate of NH₃ ranged from 0 sccm (no NH₃) to 75sccm. The deposition rates increased as the substrate temperature increased. The deposition with no NH₃ had the lowest deposition rate, indicating the presence of NH₃ promoted the formation of titanium silicon nitride films.

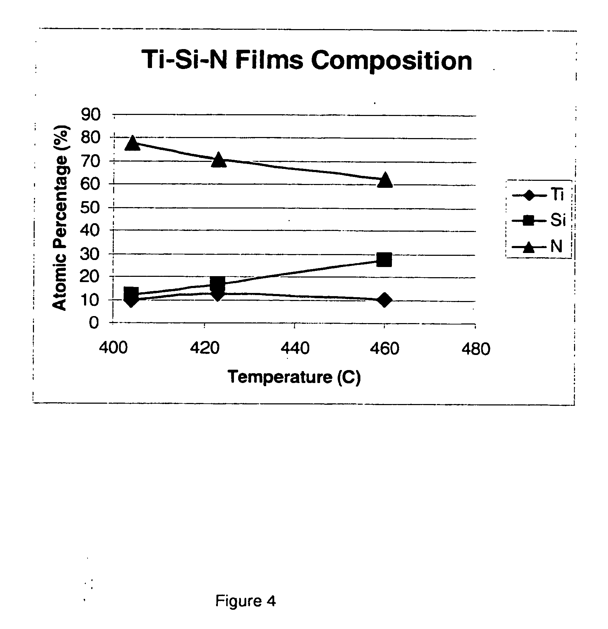

EDX analysis of titanium silicon nitride films deposited at various temperatures with NH₃ as a nitrogen-containing source indicated that the films contained titanium, silicon, and nitrogen atoms (as shown in Figure 4).

## Claims

1. A deposition process wherein an organometallic complex represented by the structure: 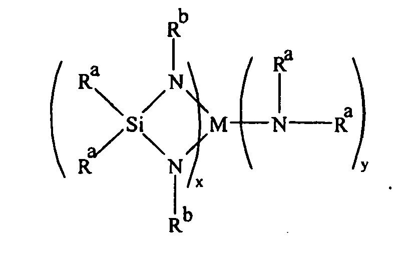 wherein:
each R^{a} is independently selected from dialkylamide, difluoralkylamide, hydrogen, alkyl, alkoxy, fluoroalkoxy, fluoroalkyl, cycloaliphatic, and aryl or two adjacent R^{a} can together form a ring optionally containing nitrogen or oxygen;
each R^{b} is independently selected from dialkylamide, difluoralkylamide, hydrogen, alkyl, alkoxy, fluoroalkoxy, fluoroalkyl, cycloaliphatic, and aryl;
M is a metal of Group 4, 5 or 6 of the Periodic Table of the Elements;
x is at least 1 and
when M is a Group 4 metal, 2x + y = 4,
when M is a Group 5 metal, 2x + y = 5, and
when M is a Group 6 metal, 2x + y = 6.
is
(a) introduced to a deposition chamber, vaporized and deposited on a substrate to form a conformal metal silicon nitride thin film; and/or
(b) reacted as precursor in an ALD or CVD process with a nitrogen containing reagent selected from ammonia, hydrazine, dimethylhydrazine and nitrogen to form a metal silicon nitride-based film; and/or
(c) reacted as precursor in an ALD or CVD process with a reagent selected from an oxidizing reagent and mixture of oxidizing and nitrogen containing reagents to form a metal silicon oxide or oxynitride-based film; and/or
(d) introduced as precursor to a deposition chamber, followed by the steps of: purging the deposition chamber to remove unreacted organometallic precursor and any byproduct;
introducing a metal amide to deposit a metal silicon nitride film on a heated substrate;
purging the deposition chamber to remove any unreacted metal amide and byproduct; and
repeating the cyclic deposition process until a desired thickness of film is established; and/or
(e) employed as precursor in a CVD process optionally with ammonia in a mixture further comprising a metal amide selected from tetrakis(dimethylamino)titanium, tetrakis(diethylamino)titanium, tetrakis(ethylmethylamino)titanium, tetrakis(dimethylamino)zirconium, tetrakis(diethylamino)zirconium, tetrakis(ethylmethylamino)zirconium, tetrakis(dimethylamino)hafnium, tetrakis(diethylamino)hafnium, tetrakis(ethylmethylamino)hafnium, *tert-*butylimino tris(diethylamino)tantalum, *tert*-butylimino tris(dimethylamino)tantalum, *tert-*butylimino tris(ethylmethylamino)tantalum, ethyllimino tris(diethylamino)tantalum, ethyllimino tris(dimethylamino)tantalum, ethyllimino tris(ethylmethylamino)tantalum, *tert*-amylimino tris(dimethylamino)tantalum, *tert-*amylimino tris(diethylamino)tantalum, pentakis(dimethylamino)tantalum, *tert*-amylimino tri(ethylmethylamino)tantalum, bis(*tert*-butylimino)bis(dimethylamino)tungsten, bis(tert-butylimino)bis(diethylamino)tungsten, bis(*tert-*butylimino)bis(ethylmethylamino)tungsten, and a mixture thereof.

2. A process as claimed in Claim 1 wherein the organometallic complex is represented by the structure: 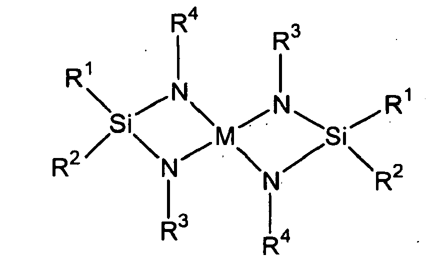 wherein M is a metal selected from Group 4 of the Periodic Table of the Elements and R¹⁻⁴ are independently selected from dialkylamide, difluoralkylamide, hydrogen, alkyl, alkoxy, fluoroalkoxy, fluoroalkyl, cycloaliphatic, and aryl with the additional provision that when R¹ and R² are dialkylamide, difluoralkylamide, alkoxy, fluoroalkoxy, or fluoroalkyl, they can be connected to form a ring.

3. The process of Claim 2, wherein one or both R¹ and/or one or both R² are hydrogen.

4. The process of Claim 2 or Claim 3, wherein one or both R³ and/or one or both R⁴ are t-butyl.

5. The process of Claim 2, wherein the organometallic complex comprises bis(N,N'-di(*tert*-butyl)-diaminosilyl)titanium.

6. A process as claimed in Claim 1, wherein the organometallic complex as is represented by the structure: 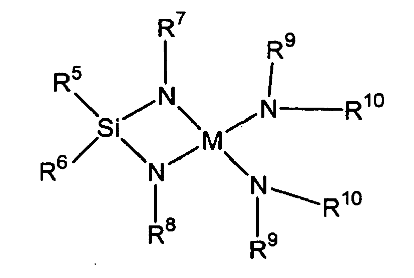 wherein M is a metal selected from Group 4 of the Periodic Table of the Elements and R⁵⁻¹⁰ are independently selected from hydrogen, alkyl, alkoxy, fluoroalkyl, fluoroalkoxy, cycloaliphatic, and aryl with the additional provisions that when R⁵ and R⁶ are alkoxy, fluoroalkoxy or fluoroalkyl they can be connected to form a ring and when R⁹ and R¹⁰ are alkoxy, fluoroalkoxy or fluoroalkyl they can be connected to form a ring.

7. The process of Claim 6, wherein one or both R⁵ and/or one or both R⁶ are selected from hydrogen and dimethylamino.

8. The process of Claim 6 or Claim 7, wherein one or both R⁷ and/or one or both R⁸ are t-butyl.

9. The process of any one of Claims 6 to 8, wherein one or both R⁹ and/or one or both R¹⁰ are methyl.

10. The process of Claim 6, wherein the organometallic complex comprises HSi(NMe₂)(Bu^{t}N)₂Ti(NMe₂)₂.

11. The process of any one of Claims 1 to 4 and 6 to 9, wherein M is selected from titanium, zirconium and hafnium.

12. A process as claimed in Claim 1, wherein the organometallic complex isrepresented by the structure: 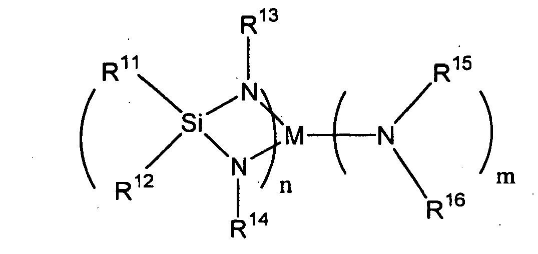 wherein M is a metal selected from Group 5 of the Periodic Table of the Elements and R¹¹⁻¹⁶ are independently selected from hydrogen, alkyl, alkoxy, fluoroalkoxy, fluoroalkyl and cycloaliphatic, and aryl; n=1,2, m=5-2n, wherein when R¹¹ and R¹² are alkoxy, fluoroalkoxy or fluoroalkyl they can be connected to form a ring and when R¹⁵ and R¹⁶ are alkoxy, fluoroalkoxy or fluoroalkyl they can be connected to form a ring.

13. The process of Claim 12 wherein M is selected from vanadium, niobium, and tantalum.

14. A process as claimed in Claim 1, wherein the organometallic complex is represented by the structure: 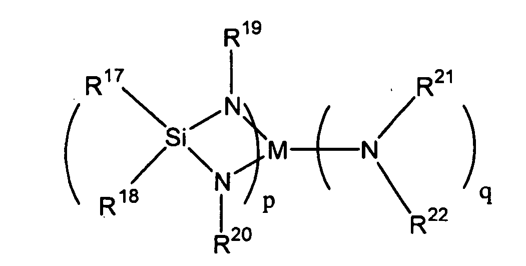 wherein M is a metal selected from Group 6 of the Periodic Table of the Elements and R¹⁷⁻²² are independently selected from hydrogen, alkyl, alkoxy, fluoroalkyl , fluoroalkoxy, cycloaliphatic, and aryl; p=1,2,3, q=6-2p, wherein when R¹⁷ and R¹⁸ are alkoxy, fluoroalkoxy, or fluoroalkyl they can be connected to form a ring and when R²¹ and R²² are alkoxy, fluoroalkoxy, or fluoroalkyl they can be connected to form a ring.

15. The process of Claim 14 wherein M is selected from chromium, molybdenum and tungsten.

16. An ALD or CVD process as claimed in any one of the preceding claims, wherein the reaction condition is selected from thermal, plasma, remote plasma and other energizing environment.

17. A process as claimed in Claim 1(d), wherein the metal amide is an amide of a metal selected from titanium, zirconium, hafnium, tantalum and tungsten.

18. A process as claimed in either one of Claims 1(d) and 17, wherein the metal amide comprises one or more groups selected from dimethylamino, diethylamino, ethylmethylamino, *tert*-butylimino, ethylimino and *tert*-amylimino.

19. The process of any one of Claims 1(d), 17 and 18 wherein the metal amide is selected from tetrakis(dimethylamino)titanium, tetrakis(diethylamino)titanium, tetrakis(ethylmethylamino)titanium, tetrakis(dimethylamino)zirconium, tetrakis(diethylamino)zirconium, tetrakis(ethylmethylamino)zirconium, tetrakis(dimethylamino)hafnium, tetrakis(diethylamino)hafnium, tetrakis(ethylmethylamino)hafnium, *tert*-butylimino tris(diethylamino)tantalum, *tert-*butylimino tris(dimethylamino)tantalum, *tert*-butylimino tris(ethylmethylamino)tantalum, ethyllimino tris(diethylamino)tantalum, ethyllimino tris(dimethylamino)tantalum, ethyllimino tris(ethylmethylamino)tantalum, *tert-*amylimino tris(dimethylamino)tantalum, *tert*-amylimino tris(diethylamino)tantalum, pentakis(dimethylamino)tantalum, *tert*-amylimino tri(ethylmethylamino)tantalum, bis(*tert*-butylimino)bis(dimethylamino)tungsten, bis(tert-butylimino)bis(diethylamino)tungsten, bis(*tert-*butylimino)bis(ethylmethylamino)tungsten, and a mixture thereof.

20. The deposition process of any one of the preceding claims selected from an atomic layer deposition (ALD) process and a chemical vapor deposition (CVD) process, optionally with ammonia.

21. The process of any one of the preceding claims using an additional treatment step selected for final film densification or film annealing, selected from thermal, ozone, plasma, UV and microwave.

22. An organometallic complex represented by the structure:
(a) 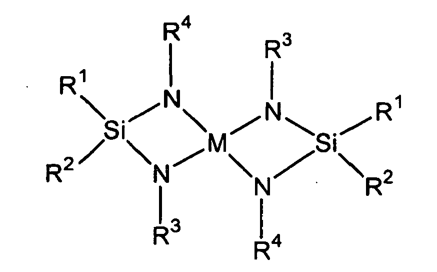 wherein M is a metal selected from Group 4 of the Periodic Table of the Elements and R¹⁻⁴ are independently selected from dialkylamide, difluoralkylamide, hydrogen, alkyl, alkoxy, fluoroalkoxy, fluoroalkyl, cycloaliphatic, and aryl with the additional provision that one or both R¹ and/or one or both R² are hydrogen and that when R¹ and R² are dialkylamide, difluoralkylamide, alkoxy, fluoroalkoxy, or fluoroalkyl, they can be connected to form a ring; or
(b) 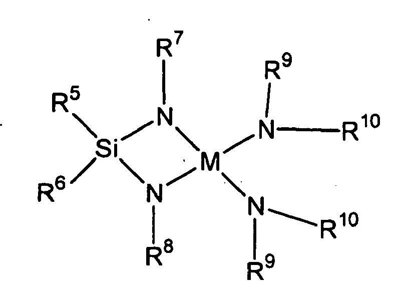 wherein M is a metal selected from Group 4 of the Periodic Table of the Elements and R⁵⁻¹⁰ are independently selected from hydrogen, alkyl, alkoxy, fluoroalkyl, fluoroalkoxy, cycloaliphatic, and aryl with the additional provisions that when R⁵ and R⁶ are alkoxy, fluoroalkoxy or fluoroalkyl they can be connected to form a ring and when R⁹ and R¹⁰ are alkoxy, fluoroalkoxy or fluoroalkyl they can be connected to form a ring; or
(c) 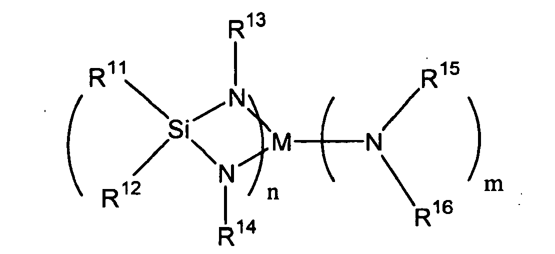 wherein M is a metal selected from Group 5 of the Periodic Table of the Elements and R¹¹⁻¹⁶ are independently selected from hydrogen, alkyl, alkoxy, fluoroalkoxy, fluoroalkyl and cycloaliphatic, and aryl; n=1,2, m=5-2n, wherein when R¹¹ and R¹² are alkoxy, fluoroalkoxy or fluoroalkyl they can be connected to form a ring and when R¹⁵ and R¹⁶ are alkoxy, fluoroalkoxy or fluoroalkyl they can be connected to form a ring; or
(d) 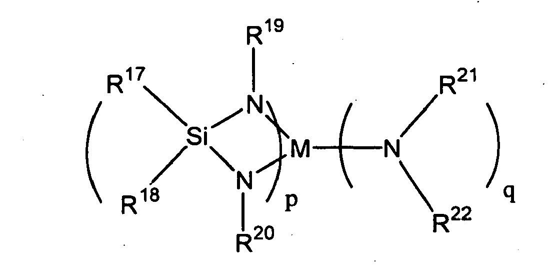 wherein M is a metal selected from Group 6 of the Periodic Table of the Elements and R¹⁷⁻²² are independently selected from hydrogen, alkyl, alkoxy, fluoroalkyl , fluoroalkoxy, cycloaliphatic, and aryl; p=1,2,3, q=6-2p, wherein when R¹⁷ and R¹⁸ are alkoxy, fluoroalkoxy, or fluoroalkyl they can be connected to form a ring and when R²¹ and R²² are alkoxy, fluoroalkoxy, or fluoroalkyl they can be connected to form a ring.

23. The organometallic complex of Claim 22(a), wherein one or both R³ and/or one or both R⁴ are t-butyl.

24. The organometallic complex of Claim 22(a), comprising bis(N,N'-di(*tert*-butyl)-diaminosilyl)titanium.

25. The organometallic complex of Claim 22(b), wherein one or both R⁵ and/or one or both R⁶ are selected from hydrogen and dimethylamino.

26. The organometallic complex of Claim 22(b) or Claim 25, wherein one or both R⁷ and/or one or both R⁸ are t-butyl.

27. The organometallic complex of Claim 22(b), Claim 25 or Claim 26, wherein one or both R⁹ and/or one or both R¹⁰ are methyl.

28. The organometallic complex of Claim 22(b), comprising HSi(NMe₂)(Bu^{t}N)₂Ti(NMe₂)₂.

29. The organometallic complex of any one of Claims 22(a)/(b) to 28, wherein M is selected from titanium, zirconium and hafnium.

30. The organometallic complex of Claim 22(c) wherein M is selected from vanadium, niobium, and tantalum.

31. The organometallic complex of Claim 22(d) wherein M is selected from chromium, molybdenum and tungsten.

## Patentansprüche

1. Abscheidungsverfahren, wobei ein metallorganischer Komplex, dargestellt durch die Struktur: 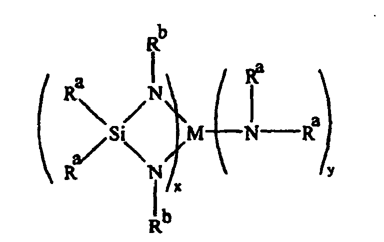 wobei:
jedes R^{a} unabhängig aus Dialkylamid, Difluoralkylamid, Wasserstoff, Alkyl, Alkoxy, Fluoralkoxy, Fluoralkyl, Cycloaliphat und Aryl ausgewählt ist oder zwei benachbarte R^{a} zusammen einen Ring, welcher gegebenenfalls Stickstoff oder Sauerstoff enthält, bilden können;
jedes R^{b} unabhängig aus Dialkylamid, Difluoralkylamid, Wasserstoff, Alkyl, Alkoxy, Fluoralkoxy, Fluoralkyl, Cycloaliphat und Aryl ausgewählt ist;
M ein Metall der Gruppe 4, 5 oder 6 des Periodensystems der Elemente ist;
x mindestens 1 ist, und
wenn M ein Gruppe 4-Metall ist, 2x + y = 4 gilt,
wenn M ein Gruppe 5-Metall ist, 2x + y = 5 gilt, und
wenn M ein Gruppe 6-Metall ist, 2x + y = 6 gilt,
(a) in eine Abscheidungskammer eingebracht, verdampft und auf einem Substrat abgeschieden wird, wobei ein konformer dünner Metallsiliciumnitrid-Film gebildet wird; und/oder
(b) als Vorläufer in einem ALD- oder CVD-Verfahren mit einem stickstoffhaltigen Reagenz, ausgewählt aus Ammoniak, Hydrazin, Dimethylhydrazin und Stickstoff, umgesetzt wird, wobei ein Film auf Metallsilicumnitrid-Basis gebildet wird; und/oder
(c) als Vorläufer in einem ALD- oder CVD-Verfahren mit einem Reagenz, ausgewählt aus einem Oxidationsreagenz und einem Gemisch von Oxidations- und stickstoffhaltigen Reagenzien, umgesetzt wird, wobei ein Film auf Metallsiliciumoxid- oder Oxynitrid-Basis gebildet wird; und/oder
(d) als Vorläufer in eine Abscheidungskammer eingebracht wird, gefolgt von den Schritten:
Spülen der Abscheidungskammer, um nicht umgesetzten metallorganischen Vorläufer und jedwedes Nebenprodukt zu entfernen;
Einbringen eines Metallamids, um einen Metallsiliciumnitrid-Film auf einem erwärmten Substrat abzuscheiden;
Spülen der Abscheidungskammer, um jedwedes nicht umgesetzte Metallamid und Nebenprodukt zu entfernen; und
Wiederholen des cyclischen Abscheidungsverfahrens, bis eine gewünschte Dicke des Film etabliert ist; und/oder
(e) als Vorläufer in einem CVD-Verfahren verwendet wird, gegebenenfalls mit Ammoniak in einem Gemisch, welches ferner ein Metallamid umfasst, welches ausgewählt ist aus Tetrakis(dimethylamino)titan, Tetrakis(diethylamino)titan, Tetrakis(ethylmethylamino)titan, Tetrakis(dimethylamino)zirconium, Tetrakis(diethylamino)zirconium, Tetrakis(ethylmethylamino)zirconium, Tetrakis(dimethylamino)hafnium, Tetrakis(diethylamino)hafnium, Tetrakis(ethylmethylamino)hafnium, *tert*-Butyliminotris(diethylamino)tantal, *tert-*Butyliminotris(dimethylamino)tantal, *tert*-Butyliminotris-(ethylmethylamino)tantal, Ethyliminotris(diethylamino)tantal, Ethyliminotris(dimethylamino)tantal, Ethyliminotris(ethylmethylamino)tantal, *tert-*Amyliminotris(dimethylamino)tantal, *tert*-Amyliminotris(diethylamino)tantal, Pentakis(dimethylamino)tantal, *tert*-Amyliminotri(ethylmethylamino)tantal, Bis(*tert*-butylimino)bis(dimethylamino)wolfram, Bis(tert-butylimino)bis(diethylamino)wolfram, Bis(*tert*-butylimino)bis(ethylmethylamino)wolfram und einem Gemisch davon.

2. Verfahren wie in Anspruch 1 beansprucht, wobei der metallorganische Komplex dargestellt wird durch die Struktur: 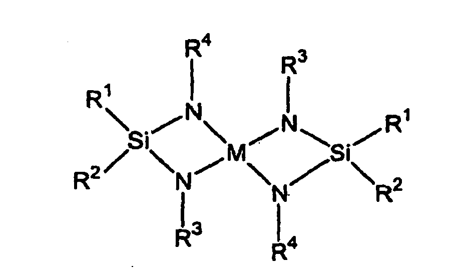 wobei M ein Metall, ausgewählt aus der Gruppe 4 des Periodensystems der Elemente, ist und R¹⁻⁴ unabhängig aus Dialkylamid, Difluoralkylamid, Wasserstoff, Alkyl, Alkoxy, Fluoralkoxy, Fluoralkyl, Cycloaliphat und Aryl ausgewählt sind, mit der zusätzlichen Maßgabe, dass, wenn R¹ und R² Dialkylamid, Difluoralkylamid, Alkoxy, Fluoralkoxy oder Fluoralkyl sind, sie verbunden sein können, wobei sie einen Ring bilden.

3. Verfahren nach Anspruch 2, wobei ein oder beide R¹ und/oder ein oder beide R² Wasserstoff sind.

4. Verfahren nach Anspruch 2 oder Anspruch 3, wobei ein oder beide R³ und/oder ein oder beide R⁴ t-Butyl sind.

5. Verfahren nach Anspruch 2, wobei der metallorganische Komplex Bis(N,N'-di(*tert-*butyl)-diaminosilyl)titan umfasst.

6. Verfahren wie in Anspruch 1 beansprucht, wobei der metallorganische Komplex dargestellt wird durch die Struktur: 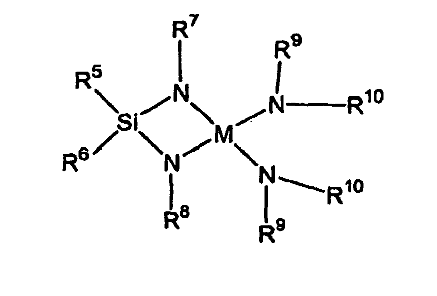 wobei M ein Metall, ausgewählt aus der Gruppe 4 des Periodensystems der Elemente, ist und R⁵⁻¹⁰ unabhängig aus Wasserstoff, Alkyl, Alkoxy, Fluoralkyl, Fluoralkoxy, Cycloaliphat und Aryl ausgewählt sind, mit den zusätzlichen Maßgaben, dass, wenn R² und R⁶ Alkoxy, Fluoralkoxy oder Fluoralkyl sind, sie verbunden sein können, wobei sie einen Ring bilden, und, wenn R⁹ und R¹⁰ Alkoxy, Fluoralkoxy oder Fluoralkyl sind, sie verbunden sein können, wobei sie einen Ring bilden.

7. Verfahren nach Anspruch 6, wobei ein oder beide R⁵ und/oder ein oder beide R⁶ aus Wasserstoff und Dimethylamino ausgewählt sind.

8. Verfahren nach Anspruch 6 oder Anspruch 7, wobei ein oder beide R⁷ und/oder ein oder beide R⁸ t-Butyl sind.

9. Verfahren nach einem der Ansprüche 6 bis 8, wobei ein oder beide R⁹ und/oder ein oder beide R¹⁰ Methyl sind.

10. Verfahren nach Anspruch 6, wobei der metallorganische Komplex HSi(NMe₂)(Bu^{t}N)₂Ti(NMe₂)₂ umfasst.

11. Verfahren nach einem der Ansprüche 1 bis 4 und 6 bis 9, wobei M aus Titan, Zirconium und Hafnium ausgewählt ist.

12. Verfahren wie in Anspruch 1 beansprucht, wobei der metallorganische Komplex dargestellt wird durch die Struktur: 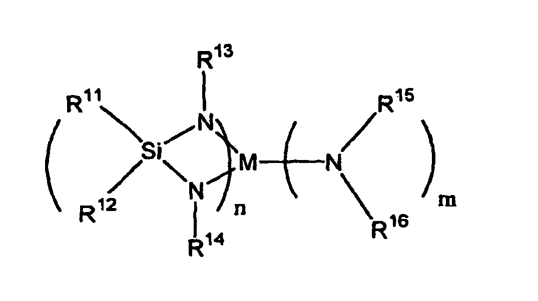 wobei M ein Metall, ausgewählt aus der Gruppe 5 des Periodensystems der Elemente, ist und R¹¹⁻¹⁶ unabhängig aus Wasserstoff, Alkyl, Alkoxy, Fluoralkoxy, Fluoralkyl und Cycloaliphat und Aryl ausgewählt sind; n=1,2 ist, m=5-2n ist, wobei, wenn R¹¹ und R¹² Alkoxy, Fluoralkoxy oder Fluoralkyl sind, sie verbunden sein können, wobei sie einen Ring bilden, und, wenn R¹⁵ und R¹⁶ Alkoxy, Fluoralkoxy oder Fluoralkyl sind, sie verbunden sein können, wobei sie einen Ring bilden.

13. Verfahren nach Anspruch 12, wobei M aus Vanadium, Niobium und Tantal ausgewählt ist.

14. Verfahren wie in Anspruch 1 beansprucht, wobei der metallorganische Komplex dargestellt wird durch die Struktur: 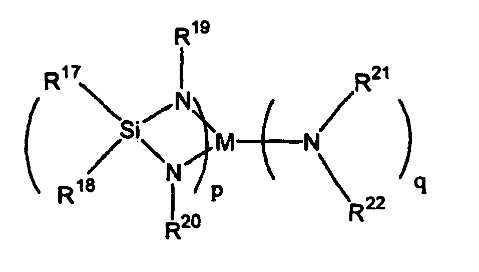 wobei M ein Metall, ausgewählt aus der Gruppe 6 des Periodensystems der Elemente, ist und R¹⁷⁻²² unabhängig aus Wasserstoff, Alkyl, Alkoxy, Fluoralkyl, Fluoralkoxy, Cycloaliphat und Aryl ausgewählt sind; p=1,2,3 ist, q=6-2p ist, wobei, wenn R¹⁷ und R¹⁸ Alkoxy, Fluoralkoxy oder Fluoralkyl sind, sie verbunden sein können, wobei sie einen Ring bilden, und, wenn R²¹ und R²² Alkoxy, Fluoralkoxy oder Fluoralkyl sind, sie verbunden sein können, wobei sie einen Ring bilden.

15. Verfahren nach Anspruch 14, wobei M aus Chrom, Molybdän und Wolfram ausgewählt ist.

16. ALD- oder CVD-Verfahren wie in einem der vorhergehenden Ansprüche beansprucht, wobei die Reaktionsbedingung aus thermisch, Plasma, Remote Plasma oder einer anderen Energetisierungsumgebung ausgewählt ist.

17. Verfahren wie in Anspruch 1(d) beansprucht, wobei das Metallamid ein Amid eines Metalls, ausgewählt aus Titan, Zirconium, Hafnium, Tantal und Wolfram, ist.

18. Verfahren wie in einem der Ansprüche 1(d) und 17 beansprucht, wobei das Metallamid ein oder mehr Reste, ausgewählt aus Dimethylamino, Diethylamino, Ethylmethylamino, *tert*-Butylimino, Ethylimino und *tert*-Amylimino, umfasst.

19. Verfahren nach einem der Ansprüche 1(d), 17 und 18, wobei das Metallamid aus Tetrakis(dimethylamino)titan, Tetrakis(diethylamino)titan, Tetrakis(ethylmethylamino)titan, Tetrakis(dimethylamino)zirconium, Tetrakis(diethylamino)zirconium, Tetrakis(ethyhnethylamino)zirconium, Tetrakis(dimethylamino)hafnium, Tetrakis(diethylamino)hafnium, Tetrakis(ethylmethylamino)hafnium, *tert*-Butyliminotris(diethylamino)tantal, *tert*-Butyliminotris(dimethylamino)tantal, *tert*-Butyliminotris(ethylmethylamino)tantal, Ethyliminotris(diethylamino)tantal, E-thyliminotris(dimethylamino)tantal, Ethyliminotris(ethylmethylamino)tantal, *tert-*Amyliminotris(dimethylamino)tantal, *tert*-Amyliminotris(diethylamino)tantal, Pentakis(dimethylamino)tantal, *tert*-Amyliminotri(ethylmethylamino)tantal, Bis(*tert-*butylimino)bis(dimethylamino)wolfram, Bis(tert-butylimino)bis(diethylamino)wolfram, Bis(*tert*-butylimino)bis(ethylmethylamino)wolfram und einem Gemisch davon ausgewählt ist.

20. Abscheidungsverfahren nach einem der vorhergehenden Ansprüche, ausgewählt aus einem Atomschichtabscheidung (ALD)-Verfahren und einem chemischen Dampfabscheidungs (CVD)-Verfahren, gegebenenfalls mit Ammoniak.

21. Verfahren nach einem der vorhergehenden Ansprüche unter Verwendung eines zusätzlichen Behandlungsschrittes, ausgewählt für Filmendverdichtung oder Filmannealing, ausgewählt aus thermisch, Ozon, Plasma, UV und Mikrowelle.

22. Metallorganischer Komplex, dargestellt durch die Struktur:
(a) 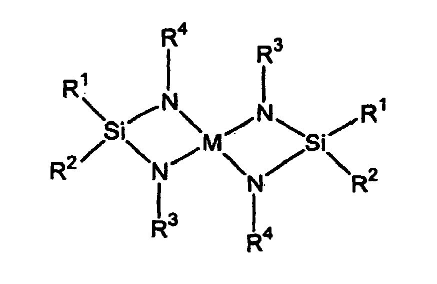 wobei M ein Metall, ausgewählt aus der Gruppe 4 des Periodensystems der Elemente, ist und R¹⁻⁴ unabhängig aus Dialkylamid, Difluoralkylamid, Wasserstoff, Alkyl, Alkoxy, Fluoralkoxy, Fluoralkyl, Cycloaliphat und Aryl ausgewählt sind, mit der zusätzlichen Maßgabe, dass ein oder beide R¹ und/oder ein oder beide R² Wasserstoff sind und dass, wenn R¹ und R² Dialkylamid, Difluoralkylamid, Alkoxy, Fluoralkoxy oder Fluoralkyl sind, sie verbunden sein können, wobei sie einen Ring bilden; oder
(b) 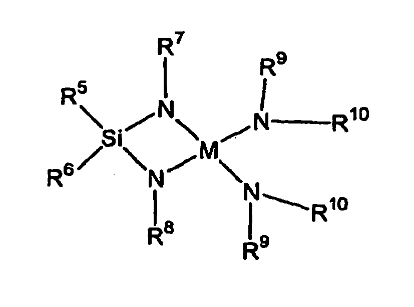 wobei M ein Metall, ausgewählt aus der Gruppe 4 des Periodensystems der Elemente, ist und R⁵⁻¹⁰ unabhängig aus Wasserstoff, Alkyl, Alkoxy, Fluoralkyl, Fluoralkoxy, Cycloaliphat und Aryl ausgewählt sind, mit den zusätzlichen Maßgaben, dass, wenn R⁵ und R⁶ Alkoxy, Fluoralkoxy oder Fluoralkyl sind, sie verbunden sein können, wobei sie einen Ring bilden, und, wenn R⁹ und R¹⁰ Alkoxy, Fluoralkoxy oder Fluoralkyl sind, sie verbunden sein können, wobei sie einen Ring bilden; oder
(c) 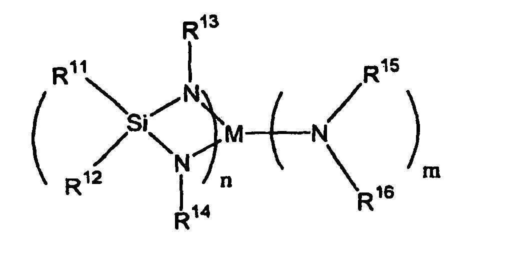 wobei M ein Metall, ausgewählt aus der Gruppe 5 des Periodensystems der Elemente, ist und R¹¹⁻¹⁶ unabhängig aus Wasserstoff, Alkyl, Alkoxy, Fluoralkoxy, Fluoralkyl und Cycloaliphat und Aryl ausgewählt sind; n=1,2 ist, m=5-2n ist, wobei, wenn R¹¹ und R¹² Alkoxy, Fluoralkoxy oder Fluoralkyl sind, sie verbunden sein können, wobei sie einen Ring bilden, und, wenn R¹⁵ und R¹⁶ Alkoxy, Fluoralkoxy oder Fluoralkyl sind, sie verbunden sein können, wobei sie einen Ring bilden; oder
(d) 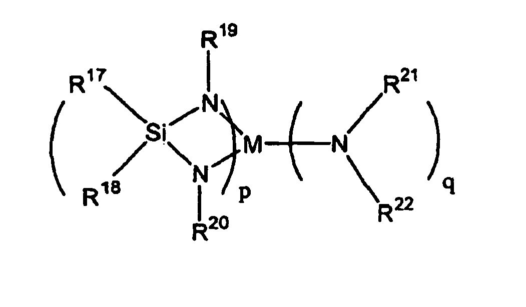 wobei M ein Metall, ausgewählt aus der Gruppe 6 des Periodensystems der Elemente, ist und R¹⁷⁻²² unabhängig aus Wasserstoff, Alkyl, Alkoxy, Fluoralkyl, Fluoralkoxy, Cycloaliphat und Aryl ausgewählt sind; p=1,2,3 ist, q=6-2p ist, wobei, wenn R¹⁷ und R¹⁸ Alkoxy, Fluoralkoxy oder Fluoralkyl sind, sie verbunden sein können, wobei sie einen Ring bilden, und, wenn R²¹ und R²² Alkoxy, Fluoralkoxy oder Fluoralkyl sind, sie verbunden sein können, wobei sie einen Ring bilden.

23. Metallorganischer Komplex nach Anspruch 22(a), wobei ein oder beide R³ und/oder ein oder beide R⁴ t-Butyl sind.

24. Metallorganischer Komplex nach Anspruch 22(a), umfassend Bis(N,N'-di(*tert*-butyl)-diaminosilyl)titan.

25. Metallorganischer Komplex nach Anspruch 22(b), wobei ein oder beide R⁵ und/oder ein oder beide R⁶ aus Wasserstoff und Dimethylamino ausgewählt sind.

26. Metallorganischer Komplex nach Anspruch 22(b) oder Anspruch 25, wobei ein oder beide R⁷ und/oder ein oder beide R⁸ t-Butyl sind.

27. Metallorganischer Komplex nach Anspruch 22(b), Anspruch 25 oder Anspruch 26, wobei ein oder beide R⁹ und/oder ein oder beide R¹⁰ Methyl sind.

28. Metallorganischer Komplex nach Anspruch 22(b), umfassend HSi(NMe₂)(Bu^{t}N)₂Ti(NMe₂)₂.

29. Metallorganischer Komplex nach einem der Ansprüche 22(a)/(b) bis 28, wobei M aus Titan, Zirconium und Hafnium ausgewählt ist.

30. Metallorganischer Komplex nach Anspruch 22(c), wobei M aus Vanadium, Niobium und Tantal ausgewählt ist.

31. Metallorganischer Komplex nach Anspruch 22(d), wobei M aus Chrom, Molybdän und Wolfram ausgewählt ist.

## Revendications

1. Procédé de dépôt dans lequel un complexe organométallique représenté par la structure: 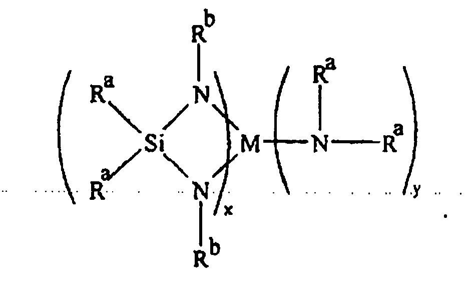 où:
chaque R^{a} est indépendamment sélectionné parmi dialkylamide, difluoralkylamide, hydrogène, alkyle, alcoxy, fluoroalcoxy, fluoroalkyle, cycloaliphatique, et aryle ou deux R^{a} adjacents peuvent former ensemble un cycle contenant optionnellement de l'azote ou de l'oxygène;
chaque R^{b} est indépendamment sélectionné parmi dialkylamide, difluoralkylamide, hydrogène, alkyle, alcoxy, fluoroalcoxy, fluoroalkyle, cycloaliphatique, et aryle;
M est un métal du Groupe 4, 5 ou 6 du Tableau Périodique des Eléments;
x est au moins 1 et
lorsque M est un métal du Groupe 4, 2x + y = 4,
lorsque M est un métal du Groupe 5, 2x + y = 5, et
lorsque M est un métal du Groupe 6, 2x + y = 6.
est
(a) introduit dans une chambre de dépôt, vaporisé et déposé sur un substrat pour former un film mince de nitrure de silicium en métal conforme; et/ou
(b) fait réagir en tant que précurseur dans un procédé ALD ou CVD avec un réactif contenant de l'azote sélectionné parmi de l'ammoniac, hydrazine, diméthylhydrazine et azote pour former un film à base de nitrure de silicium en métal; et/ou
(c) fait réagir en tant que précurseur dans un procédé ALD ou CVD avec un réactif sélectionné parmi un réactif d'oxydation et un mélange de réactif d'oxydation et de réactif contenant de l'azote pour former un oxyde de silicium en métal ou un film à base d'oxynitrure; et/ou
(d) introduit comme précurseur dans une chambre de dépôt, suivi par les étapes qui consistent à:
purger la chambre de dépôt pour retirer le précurseur organométallique n'ayant pas réagi et tout sous-produit;
introduire un amide métallique pour déposer un film de nitrure de silicium en métal sur un substrat chauffé;
purger la chambre de dépôt pour retirer tout amide métallique n'ayant pas réagi et tout sous-produit; et
répéter le procédé de dépôt cyclique jusqu'à ce qu'une épaisseur de film désirée soit établie; et/ou
(e) employé comme précurseur dans un procédé CVD, optionnellement avec de l'ammoniac dans un mélange comprenant en plus un amide métallique sélectionné parmi le tétrakis (diméthylamino) titane, tétrakis (diéthylamino) titane, tétrakis (éthylméthylamino) titane, tétrakis(diméthylamino)zirconium, tétrakis (diéthylamino) zirconium, tétrakis (éthylméthylamio) zirconium, tétrakis (diméthylamino) hafnium, tétrakis (diéthylamino) hafnium, tétrakis (éthylméthylamino) hafnium, tert-butylimino tris (diéthylamino) tantale, tert-butylimino tris (diméthylamino) tantale, tert-butylimino tris (éthylméthylamino) tantale, éthyllimino tris (diéthylamino) tantale, éthyllimino tris (diméthylamino) tantale, éthyllimino tris (éthylméthylamino) tantale, tert-amylimino tris (diméthylamino) tantale, tert-amylimino tris (diéthylamino) tantale, pentakis (diméthylamino) tantale, tert-amylimino tri (éthylméthylamino) tantale, bis (tert-butylimino) bis (diméthylamino) tungstène, bis (tert-butylimino) bis (diéthylamino) tungstène, bis (tert-butylimino) bis (éthylméthylamino) tungstène, et un mélange de ceux-ci.

2. Procédé tel que revendiqué dans la revendication 1 dans lequel le complexe organométallique est représenté par la structure: 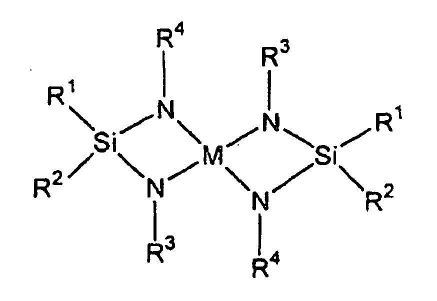 où M est un métal sélectionné parmi le Groupe 4 du Tableau Périodique des Eléments et R¹⁻⁴ sont indépendamment sélectionnés parmi le dialkylamide, difluoralkylamide, hydrogène, alkyle, alcoxy, fluoroalcoxy, fluoroalkyle, cycloaliphatique, et aryle avec la condition supplémentaire selon laquelle, lorsque R¹ et R² sont dialkylamide, difluoralkylamide, alcoxy, fluoroalcoxy ou fluoroalkyle, ils peuvent être liés pour former un cycle.

3. Procédé de la revendication 2, dans lequel un ou deux R¹ et/ou un ou deux R² sont de l'hydrogène.

4. Procédé de la revendication 2 ou 3, dans lequel un ou deux R³ et/ou un ou deux R⁴ sont t-butyle.

5. Procédé de la revendication 2, dans lequel le complexe organométallique comprend bis (N,N'-di (tert-butyl)-diaminosilyl) titane.

6. Procédé tel que revendiqué dans la revendication 1, dans lequel le complexe organométallique est représenté par la structure: 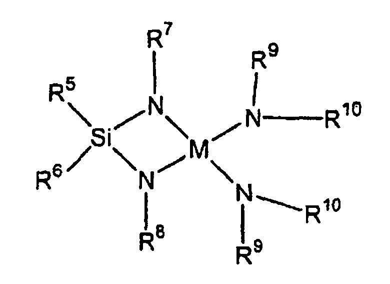 où M est un métal sélectionné parmi le Groupe 4 du Tableau Périodique des Eléments et R⁵⁻¹⁰ sont indépendamment sélectionnés parmi l'hydrogène, alkyle, alcoxy, fluoroalkyle, fluoroalcoxy, cycloaliphatique et aryle avec les conditions supplémentaires dans lesquelles, lorsque R⁵ et R⁶ sont alcoxy, fluoroalcoxy ou fluoroalkyle, ils peuvent être liés pour former un cycle et lorsque R⁹ et R¹⁰ sont alcoxy, fluoroalcoxy ou fluoroalkyle, ils peuvent être liés pour former un cycle.

7. Procédé de la revendication 6, dans lequel un ou deux R⁵ et/ou un ou deux R⁶ sont sélectionnés parmi l'hydrogène et diméthylamino.

8. Procédé de la revendication 6 ou 7, dans lequel un ou deux R⁷ et/ou un ou deux R⁸ sont t-butyle.

9. Procédé de l'une quelconque des revendications 6 à 8, dans lequel un ou deux R⁹ et/ou un ou deux R¹⁰ sont méthyle.

10. Procédé de la revendication 6, dans lequel le complexe organométallique comprend HSi(NMe₂)(Bu¹N)₂Ti(NMe₂)₂.

11. Procédé de l'une quelconque des revendications 1 à 4 et 6 à 9, dans lequel M est sélectionné parmi le titane, zirconium et hafnium.

12. Procédé tel que revendiqué dans la revendication 1, dans lequel le complexe organométallique est représenté par la structure: 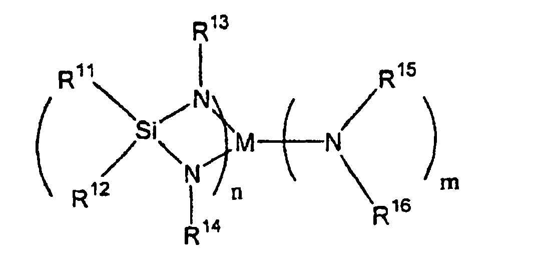 où M est un métal sélectionné parmi le Groupe 5 du Tableau Périodique des Eléments et R¹¹⁻¹⁶ sont indépendamment sélectionnés parmi l'hydrogène, alkyle, alcoxy, fluoroalcoxy, fluoroalkyle et cycloaliphatique, et aryle; n=1,2, m=5-2n, où lorsque R¹¹ et R¹² sont alcoxy, fluoroalcoxy ou fluoroalkyle, ils peuvent être liés pour former un cycle et lorsque R¹⁵ et R¹⁶ sont alcoxy, fluoroalcoxy ou fluoroalkyle, ils peuvent être liés pour former un cycle.

13. Procédé de la revendication 12, dans lequel M est sélectionné parmi le vanadium, niobium, et tantale.

14. Procédé tel que revendiqué dans la revendication 1, dans lequel le complexe organométallique est représenté par la structure: 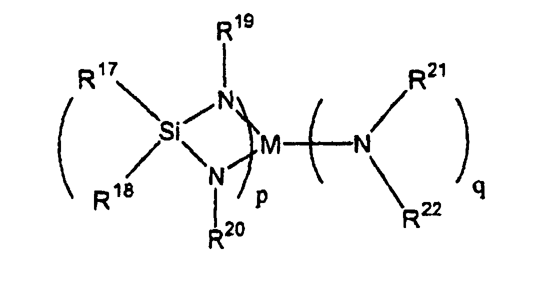 où M est un métal sélectionné parmi le Groupe 6 du Tableau Périodique des Eléments et R¹⁷⁻²² sont indépendamment sélectionnés parmi l'hydrogène, alkyle, alcoxy, fluoroalkyle, fluoroalcoxy, cycloaliphatique et aryle; p=1,2,3, q=6-2p, où lorsque R¹⁷ et R¹⁸ sont alcoxy, fluoroalcoxy ou fluoroalkyle, ils peuvent être liés pour former un cycle et lorsque R²¹ et R²² sont alcoxy, fluoroalcoxy, ou fluoroalkyle, ils peuvent être liés pour former un cycle.

15. Procédé de la revendication 14 dans lequel M est sélectionné parmi le chrome, molybdène et tungstène.

16. Procédé ALD ou CVD tel que revendiqué dans l'une quelconque des revendications précédentes, dans lequel la condition de la réaction est sélectionnée parmi un milieu thermique, un milieu ionisé, un milieu ionisé à distance et autre milieu d'excitation.

17. Procédé tel que revendiqué dans la revendication 1 (d), dans lequel l'amide métallique est un amide d'un métal sélectionné parmi le titane, zirconium, hafnium, tantale et tungstène.

18. Procédé tel que revendiqué dans l'une ou l'autre des revendications 1 (d) et 17, dans lequel l'amide métallique comprend un ou plusieurs groupes sélectionnés parmi le diméthylamino, diéthylamino, éthylméthylamino, tert-butylimino, éthylimino et tert-amylimino.

19. Procédé de l'une quelconque des revendications 1(d), 17 et 18, dans lequel l'amide métallique est sélectionné parmi le tétrakis (diméthylamino) titane, tétrakis (diéthylamino) titane, tétrakis (éthylméthylamino) titane, tétrakis (diméthylamino) zirconium, tétrakis (diéthylamino) zirconium, tétrakis (éthylméthylamino) zirconium, tétrakis (diméthylamino) hafnium, tétrakis (diéthylamino) hafnium, tétrakis (éthylméthylamino) hafnium, tert-butylimino tris (diéthylamino) tantale, tert-butylimino tris (diméthylamino) tantale, tert-butylimino tris (éthylméthylamino) tantale, éthyllimino tris (diéthylamino) tantale, éthyllimino tris (diméthylamino) tantale, éthyllimino tris (éthylmethylamino) tantale, tert-amylimino tris (diméthylamino) tantale, tert-amylimino tris (diéthylamino) tantale, pentakis (diméthylamino) tantale, tert-amylimino tri (éthylméthylamino) tantale, bis (tert-butylimino) bis (diméthylamino) tungstène, bis (tert-butylimino) bis (diéthylamino) tungstène, bis (tert-butylimino) bis (éthylméthylamino) tungstène et un mélange de ceux-ci.

20. Procédé de dépôt de l'une quelconque des revendications précédentes sélectionné parmi un procédé de dépôt de couches atomiques (ALD) et un procédé de dépôt chimique en phase vapeur (CVD), optionnellement avec l'ammoniac.

21. Procédé de l'une quelconque des revendications précédentes utilisant une étape de traitement additionnelle sélectionnée pour une densification finale de film ou un recuit de film, sélectionné parmi les éléments suivants: thermique, ozone, ionisé, UV et micro-onde.

22. Complexe organométallique représenté par la structure:
(a) 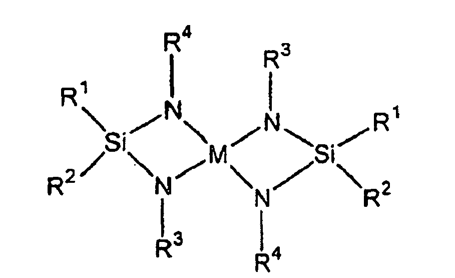 où M est un métal sélectionné parmi le Groupe 4 du Tableau Périodique des Eléments et R¹⁻⁴ sont indépendamment sélectionnés parmi le dialkylamide, difluoralkylamide, hydrogène, alkyle, alcoxy, fluoroalcoxy, fluoroalkyle, cycloaliphatique, et aryle avec la condition supplémentaire dans laquelle un ou deux R¹ et/ou un ou deux R² sont de l'hydrogène, et où R¹ et R² sont dialkylamide, difluoralkylamide, alcoxy, fluoroalcoxy ou fluoroalkyle, ils peuvent être liés pour former un cycle; ou
(b) 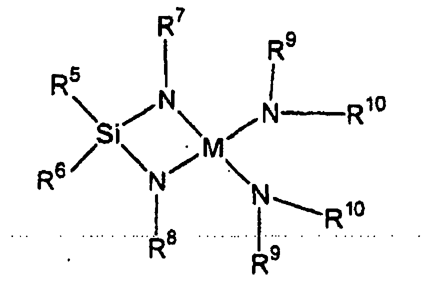 où M est un métal sélectionné parmi le Groupe 4 du Tableau Périodique des Eléments et R⁵⁻¹⁰ sont indépendamment sélectionnés parmi l'hydrogène, alkyle, alcoxy, fluoroalkyle, fluoroalcoxy, cycloaliphatique et aryle avec les conditions supplémentaires dans lesquelles, lorsque R⁵ et R⁶ sont alcoxy, fluoroalcoxy ou fluoroalkyle, ils peuvent être liés pour former un cycle et lorsque R⁹ et R¹⁰ sont alcoxy, fluoroalcoxy ou fluoroalkyle, ils peuvent être liés pour former un cycle; ou
(c) 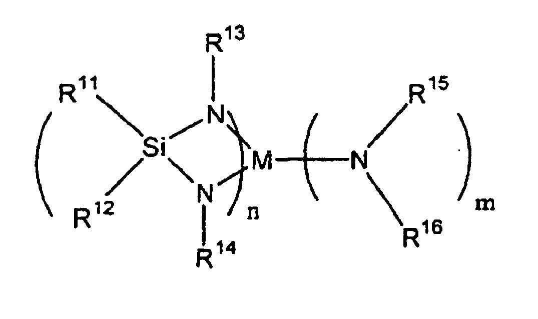 où M est un métal sélectionné parmi le Groupe 5 du Tableau Périodique des Eléments et R¹¹⁻¹⁶ sont indépendamment sélectionnés parmi l'hydrogène, alkyle, alcoxy, fluoroalcoxy, fluoroalkyle et cycloaliphatique, et aryle; n=1,2, m=5-2n, où lorsque R¹¹ et R¹² sont alcoxy, fluoroalcoxy ou fluoroalkyle, ils peuvent être liés pour former un cycle et lorsque R¹⁵ et R¹⁶ sont alcoxy, fluoroalcoxy ou fluoroalkyle, ils peuvent être liés pour former un cycle; ou
(d) 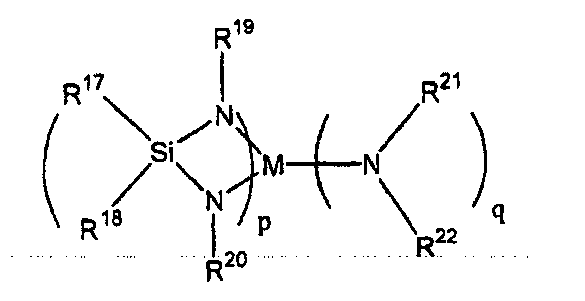 où M est un métal sélectionné parmi le Groupe 6 du Tableau Périodique des Eléments et R¹⁷⁻²² sont indépendamment sélectionnés parmi l'hydrogène, alkyle, alcoxy, fluoroalkyle, fluoroalcoxy, cycloaliphatique, et aryle; n=1,2,3; q=6-2p, où lorsque R¹⁷ et R¹⁸ sont alcoxy, fluoroalcoxy ou fluoroalkyle, ils peuvent être liés pour former un cycle et lorsque R²¹ et R²² sont alcoxy, fluoroalcoxy ou fluoroalkyle, ils peuvent être liés pour former un cycle.

23. Complexe organométallique de la revendication 22(a), dans lequel un ou deux R³ et/ou un ou deux R⁴ sont t-butyle.

24. Complexe organométallique de la revendication 22(a), comprenant bis (N,N'-di(tert-butyl)-diaminosilyl) titane.

25. Complexe organométallique de la revendication 22(b), dans lequel un ou deux R⁵ et/ou un ou deux R⁶ sont sélectionnés parmi l'hydrogène et diméthylamino.

26. Complexe organométallique de la revendication 22(b) ou 25, dans lequel un ou deux R⁷ et/ou un ou deux R⁸ sont t-butyle.

27. Complexe organométallique de la revendication 22(b), 25 ou 26 dans lequel un ou deux R⁹ et/ou un ou deux R¹⁰ sont méthyle.

28. Complexe organométallique de la revendication 22(b), comprenant HSi(NMe₂)(Bu¹N)₂Ti(NMe₂)₂.

29. Complexe organométallique de l'une quelconque des revendications 22(a)/(b) à 28, dans lequel M est sélectionné parmi le titane, zirconium et hafnium.

30. Complexe organométallique de la revendication 22(c), dans lequel M est sélectionné parmi le vanadium, niobium, et tantale.

31. Complexe organométallique de la revendication 22(d), dans lequel M est sélectionné parmi le chrome, molybdène et tungstène.
